# EUROPÄISCHE PATENTSCHRIFT

(11) **EP 3 095 717 B1**
(45) Veröffentlichungstag und Bekanntmachung des Hinweises auf die Patenterteilung: **25.04.2018**
(21) Anmeldenummer: 15168593.0
(22) Anmeldetag: 21.05.2015
(51) Int. Cl.: B65B 31/04, B29C 65/74, B29C 65/00, B65B 7/16, B08B 3/02, B08B 9/032, B29C 65/78, B29C 65/02, B65B 31/00, B65B 31/02, B65B 51/00, B65B 61/06

(54) **SCHALENVERSCHLIESSMASCHINE**
JACKET CLOSING MACHINE
MACHINE DE VERROUILLAGE DE COQUES

(43) Veröffentlichungstag der Anmeldung: 23.11.2016
(73) Patentinhaber: MULTIVAC Sepp Haggenmüller SE & Co. KG, 87787 Wolfertschwenden (DE)
(72) Erfinder: MADER, Andreas, 87463 Dietmannsried (DE)
(74) Vertreter: Grünecker Patent- und Rechtsanwälte PartG mbB

(56) Entgegenhaltungen:
- WO-A1-2011/124548
- US-A1- 2011 072 764

## Beschreibung

Die Erfindung bezieht sich auf eine Schalenverschließmaschine gemäß dem Oberbegriff des Anspruchs 1 sowie auf ein Verfahren gemäß dem Oberbegriff des Anspruchs 8.

Aus der EP 1 842 776 A2 ist eine Schalenverschließmaschine mit einer Schalenaufnahme bekannt, wobei über Öffnungen in der Schalenaufnahme ein Gas zugeführt und abgeführt werden kann, um die Atmosphäre in einer mit Produkt gefüllten Schale zu modifizieren.

Die WO 2011/124548 A1 offenbart eine Schalenversiegelungsmaschine mit einem Siegelwerkzeug, bei dem im Unterteil des Werkzeugs diverse Öffnungen zum Evakuieren und Begasen der Verpackung vorgesehen sind.

Die EP 2 641 835 A1 offenbart eine Schalenverschließmaschine mit einem optimierten Siegelwerkzeug mit einer Begasungs- und einer Evakuierungsöffnung, wobei beide Öffnungen an einer gemeinsamen Seite des Siegelwerkzeugs angeordnet sind, um einen U-förmigen Strömungsverlauf ohne Turbulenzen zu erreichen. Bei Produkten, die an ihrer Oberfläche kleine Partikel wie Panadebrösel, Kräuter oder Gewürze aufweisen, können diese Partikel von der Gasströmung aufgenommen und mitgenommen werden. Im Bereich der gegenüber den Öffnungen liegenden Seite kann die Stärke der Strömung derart abfallen, dass es zum teilweisen Ablagern der Partikel auf dem Schalenrand und einer Schneidnut einer Schalenaufnahme kommt. Die Ablagerungen der Partikel auf dem Schalenrand, der zum Teil als Siegelfläche dient, können zu Mängeln der Siegelung und in Folge zu Ausschuss von nicht verwertbaren Verpackungen führen. Ablagerungen in der Schneidnut können sich im laufenden Betrieb aufhäufen und zu Problemen bzw. höheren Belastungen beim Schneidprozess führen.

Aufgabe der vorliegenden Erfindung ist es, eine verbesserte Schalenverschließmaschine zur Verfügung zu stellen, die die zuvor genannten Probleme beseitigt.

Diese Aufgabe wird gelöst durch eine Schalenverschließmaschine mit den Merkmalen des Anspruchs 1 bzw. durch ein Verfahren zum Betrieb einer solchen Schalenverschließmaschine mit den Merkmalen des Anspruchs 8. Vorteilhafte Weiterbildungen der Erfindung sind in den Unteransprüchen angegeben.

Die erfindungsgemäße Schalenverschließmaschine umfasst ein Siegelwerkzeugunterteil mit einer Schalenaufnahme und ein Siegelwerkzeugoberteil, wobei die Schalenaufnahme eine Schneidnut, die jeweils umlaufend um jede Öffnung für eine Schale in der Schalenaufnahme vorgesehen ist, aufweist. Die erfindungsgemäße Schalenverschließmaschine zeichnet sich dadurch aus, dass die Schalenaufnahme zusätzlich zu Begasungs- und Evakuierungsöffnungen wenigstens eine jeweils in die Schneidnut weisende Eingangsöffnung und Ausgangsöffnung zum Gasspülen der Schneidnut aufweist. Dies führt zu einer Gasströmung innerhalb der Schneidnut, die Fremdpartikel wie Kräuter oder kleine Produktreste, die sich in der Schneidnut abgesetzt haben, in Richtung der Ausgangsöffnung und weiter durch diese Öffnung in das Innere des Siegelwerkzeugunterteils unterhalb der Schalenaufnahme oder direkt nach außen aus dem Werkzeugunterteil hinaus beispielsweise in einen Sammelbehälter befördert. So wird die Verschmutzung der Schalenaufnahme und auch der Siegelfläche am Schalenrand vermieden oder wenigstens stark verringert.

Vorzugsweise sind die Eingangsöffnung und die Ausgangsöffnung unterhalb einer Schalenauflage der Schalenaufnahme angeordnet, um die Gasströmung in der Schneidnut zu optimieren, so dass die Schneidnut als Kanal für die Strömung von der Eingangsöffnung bis hin zur Ausgangsöffnung fungieren kann.

Die Eingangsöffnung und die Ausgangsöffnung weisen bevorzugt eine zueinander parallele Ausrichtung auf, da bei rechteckigen Schalen mittels einer U-förmigen Strömung wenigstens drei Seiten der Schneidnut reinigbar sind.

In einer besonders vorteilhaften Ausführung weist die Eingangsöffnung eine Querschnittsfläche von 20 bis 50 mm2 und/oder die Ausgangsöffnung eine Querschnittsfläche von 30 bis 80 mm2 auf, wobei die Eingangsöffnung auch mehrere Bohrungen mit der angegebenen Querschnittsfläche umfassen kann. Diese Ausführung sorgt einerseits für eine wirksame Gasströmung und andererseits für ein optimiertes Herausfördern der Partikel aus der Schneidnut durch die Ausgangsöffnung.

Vorzugsweise ist eine Leitung innerhalb der Schalenaufnahme von der Ausgangsöffnung nach unten in ein Inneres des Siegelwerkzeugunterteils vorgesehen. Durch die Leitung können von der Gasströmung mitgenommene Partikel oder Verunreinigungen abgeführt werden.

Die Schalenaufnahme weist jeweils mehrere Begasungsöffnungen und Evakuierungsöffnungen zum Begasen oder Gasspülen jeweils einer Schale bzw. des Raums innerhalb der Schale auf. Dabei sind die Begasungsöffnungen vorzugsweise oberhalb einer Ebene, die durch die Schalenauflage definiert ist, vorgesehen, um effizient eine modifizierte Atmosphäre im Inneren der Schale bzw. der Verpackung zu erzeugen.

Bevorzugt sind dabei die Eingangsöffnung und die Ausgangsöffnung jeweils auf einer gemeinsamen Seite mit den Begasungs- und Evakuierungsöffnungen angeordnet, da es an dieser gemeinsamen Seite zu keinen oder nur sehr geringen unerwünschten Ablagerungen von Partikeln in der Schneidnut und auf dem Schalenrand kommt. Alle Öffnungen weisen zweckmäßigerweise eine gemeinsame zueinander parallele Ausrichtung auf.

Ein erfindungsgemäßes Verfahren zum Reinigen einer Schneidnut einer zuvor beschriebenen Schalenverschließmaschine zeichnet sich dadurch aus, dass vor dem Siegeln und/oder während des Siegelns ein Gas durch die Eingangsöffnung in die Schneidnut eingebracht wird und dieses Gas durch die Ausgangsöffnung wenigstens teilweise aus der Schneidnut ausgeleitet wird, um Partikel oder Fremdkörper, die sich in der Schneidnut befinden, aus dieser ganz oder teilweise zu entfernen. Als Gas ist nicht nur Sauerstoff, Stickstoff oder ein Gemisch von beiden, sondern auch Luft bzw. andere Gase und Gasgemische denkbar.

Der Strömungsverlauf des Gases innerhalb der Schneidnut ist vorzugsweise weitestgehend kongruent zum Strömungsverlauf des Gases zum Gasspülen der Schale, um Turbulenzen zu verhindern und eine effektive Reinigung der Siegelfläche auf dem Schalenrand zu bewirken.

Im Folgenden wird ein vorteilhaftes Ausführungsbeispiel der Erfindung anhand einer Zeichnung näher erläutert. Im Einzelnen zeigen:
- Fig. 1: ein Beispiel einer erfindungsgemäßen Schalenverschließmaschine,
- Fig. 2: eine schematische Schnittansicht von Siegelwerkzeugunterteil und Siegelwerkzeugoberteil,
- Fig. 3: eine Detailansicht der Schalenaufnahme und
- Fig. 4: eine schematische Ansicht der Schalenaufnahme.

Gleiche Komponenten sind in den Figuren durchgängig mit gleichen Bezugszeichen versehen.

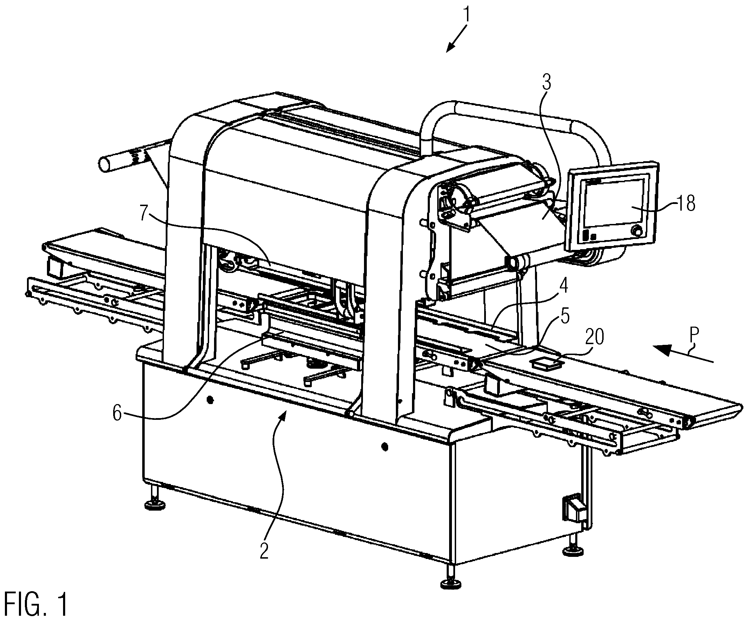

Figur 1 zeigt ein Beispiel einer Schalenversiegelungsmaschine 1 mit einer Siegelstation 2, die Schalen 20 mit einer Deckelfolie 3 versiegelt, und einem Greifersystem 4, das die Schalen 20 in einer Transportrichtung P von einem Zuführförderer 5 in die Siegelstation 2 bewegt. Die Siegelstation 2 weist ein Siegelwerkzeugunterteil 6 und ein darüber angeordnetes Siegelwerkzeugoberteil 7 auf. Eine Steuerung 18 steuert und überwacht alle Vorgänge in der Schalenversiegelungsmaschine 1.

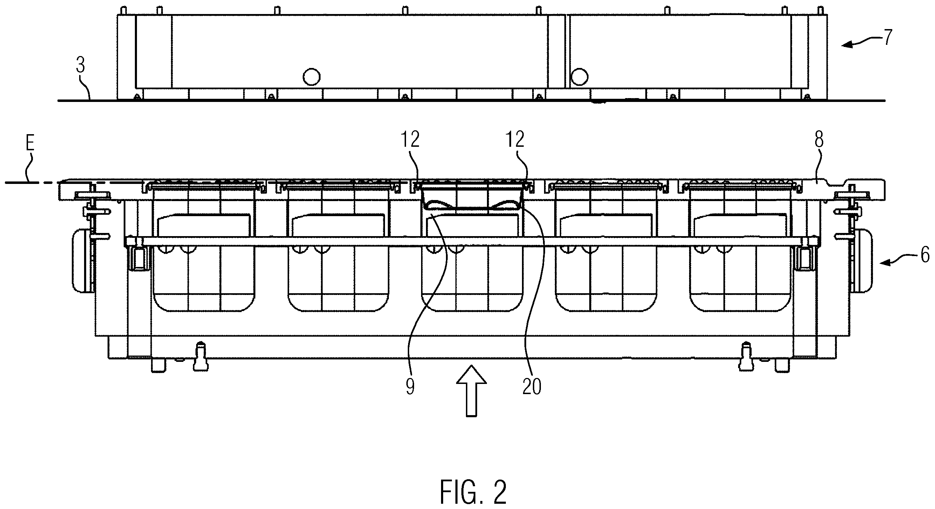

Fig. 2 zeigt eine vertikale Schnittansicht des Siegelwerkzeugunterteils 6 mit einer Schalenaufnahme 8 und des Siegelwerkzeugoberteils 7 in offener Stellung. Lediglich in einer mittleren Öffnung 9 der Schalenaufnahme 8 ist eine Schale 20 dargestellt. An der Unterseite des Siegelwerkzeugoberteils 7 ist die Deckelfolie 3 dargestellt. Das Siegelwerkzeugunterteil 6 ist zusammen mit der Schalenaufnahme 8 und der Schale 20 mittels eines nicht näher dargestellten Hubwerks in Pfeilrichtung nach oben an die Deckelfolie 3 und das Siegelwerkzeugoberteil 7 bewegbar. Die Schalenaufnahme 8 weist für jede Schale 20 eine Schalenauflage 12 auf, die eine Ebene E definiert.

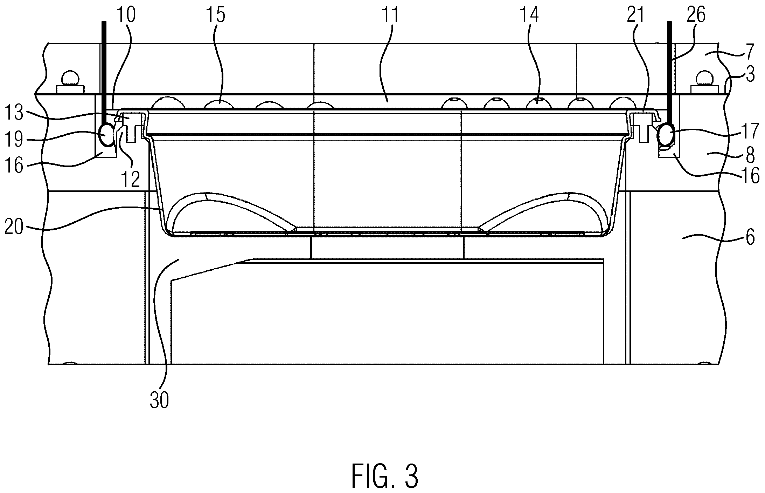

Fig. 3 zeigt einen Detailausschnitt des mittleren Bereichs der Schalenaufnahme 8 mit der Schale 20 und einem bereits aus der Deckelfolie 3 ausgetrennten Folienabschnitt 10, wobei sich das Siegelwerkzeugunterteil 6 und das Siegelwerkzeugoberteil 7 nun in einer geschlossenen Stellung befinden und eine gasdichte Kammer 11 um die Schale 20 bilden, um das Innere der Schale 20 zu evakuieren und/oder zu begasen, nämlich eine modifizierte Atmosphäre zu bilden. Die Schalenaufnahme 8 weist zur Aufnahme der Schale 20 bzw. des Schalenrands 21 eine Schalenauflage 12, die zum Zweck des Abdichtens eine Silikondichtung 13 umfasst, auf. Das Siegelwerkzeugunterteil 6 weist unterhalb der Schalenaufnahme 8 bzw. unterhalb der Schale 20 einen Innenraum 30 auf.

In dieser Schnittansicht sind rechts hinter der Schale 20 fünf Begasungsöffnungen 14 und links vier Evakuierungs- bzw. Ausgangsöffnungen 15 dargestellt, die wenigstens teilweise oberhalb der Schalenauflage 12 angeordnet sind, um eine Strömung über dem Schalenrand 21 und der Schale 20 zu erzeugen. Die Schalenaufnahme 8 weist jeweils eine um die Öffnung 9 der Schalenaufnahme 8 und um die Schalenauflage 12 ringsum laufende Schneidnut 16 auf. Im hinteren rechten Bereich von der Zeichenebene bzw. der Schneidnut 16 sind eine Eingangsöffnung 17 zum Zuführen eines Gases in die Schneidnut 16 und im hinteren linken Bereich eine Ausgangsöffnung 19 zum Austreten des Gases vorgesehen, wobei die Eingangsöffnung 17 und Ausgangsöffnung 19 vollständig unterhalb der Ebene E der Schalenauflage 12 angeordnet sind. Fig. 3 zeigt auch schematisch ein Messer 26, das aus der Deckelfolie 3 den Folienabschnitt 10 vor, während oder nach dem Siegeln heraustrennt und dabei in die Schneidnut 16 nach unten eintaucht.

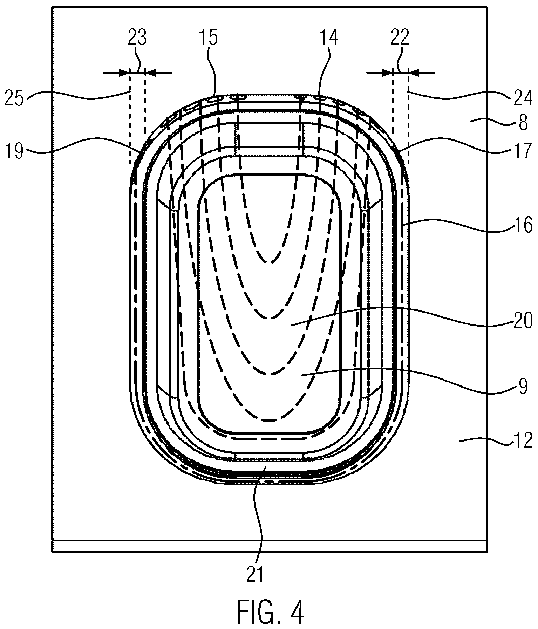

Fig. 4 zeigt in einer isometrischen Ansicht die Schalenaufnahme 8 mit der Öffnung 9, der Schalenauflage 12 und der Schneidnut 16. Anhand gestrichelter Linien ist die Gasströmung, die über die fünf Begasungsöffnungen 14 und die vier Evakuierungsöffnungen 15 erzeugt werden kann, dargestellt. Diese U-förmige Gasströmung sorgt für ein Modifizieren der Atmosphäre des Inneren der Schale 20, um beispielsweise den Sauerstoffanteil zu minimieren, um ein zu verpackendes Lebensmittel über längere Zeit haltbar zu machen.

Eine über die Eingangsöffnung 17 und die Ausgangsöffnung 19 in der Schneidnut 16 erzeugte, ebenfalls U-förmige Gasströmung, die in der Fig. 4 als Strich-Punkt-Linie dargestellt ist, sorgt für einen Abtransport von Partikeln oder kleinen Produktresten, die sich auf dem Schalenrand 21 oder in der Schneidnut 16 abgesetzt haben, um vor allem die Siegelfläche vor dem Aufsiegeln des Folienabschnitts 10 von Fremdkörpern wie Partikeln oder kleinen Produktresten zu reinigen.

Die Eingangsöffnung 17 weist eine Querschnittsfläche 22 auf, die dem Querschnitt in einer Zuleitung 24 entspricht auf. Analog weist die Ausgangsöffnung 19 eine Querschnittsfläche 23 auf, die dem Querschnitt in einer Leitung 25 entspricht. Die Leitung 25 kann derart verlaufen, dass das austretende Gas und die Partikel nach unten in den Innenraum 30 des Siegelwerkzeugunterteils 6 gelangen und dort gesammelt werden können.

Unter der Definition Eingangsöffnung 17 bzw. Ausgangsöffnung 19 sind alternativ auch eine Mehrzahl von Bohrungen bzw. Öffnungen mit einer gemeinsamen Querschnittsfläche, die der oben erwähnten Eingangsöffnung 17 bzw. Ausgangsöffnung 19 entspricht, mit erfasst.

## Patentansprüche

1. Schalenverschließmaschine (1), umfassend ein Siegelwerkzeugunterteil (6) mit einer mindestens eine Öffnung (9) für je eine Schale (20) umfassenden Schalenaufnahme (8) und ein Siegelwerkzeugoberteil (7), wobei die Schalenaufnahme (8) pro Öffnung (9) je eine Schneidnut (16), die jeweils umlaufend um die Öffnung (9) in der Schalenaufnahme (8) vorgesehen ist, aufweist, und wobei die Schalenaufnahme (8) jeweils mehrere Begasungsöffnungen (14) und Evakuierungsöffnungen (15) zum Begasen oder Gasspülen jeweils einer Schale (20) aufweist, **dadurch gekennzeichnet, dass** die Schalenaufnahme (8) zusätzlich wenigstens eine jeweils in die Schneidnut (16) weisende Eingangsöffnung (17) und jeweils mindestens eine in die Schneidnut (16) weisende Ausgangsöffnung (19) zum Gasspülen der Schneidnut (16) durch eine von der Eingangsöffnung (17) zur Ausgangsöffnung (19) in der Schneidnut (16) verlaufende Gasströmung aufweist,

2. Schalenverschließmaschine nach Anspruch 1, **dadurch gekennzeichnet, dass** die Eingangsöffnung (17) und die Ausgangsöffnung (19) unterhalb einer Ebene (E) einer Schalenauflage (12) der Schalenaufnahme (8) angeordnet sind.

3. Schalenverschließmaschine nach einem der vorangehenden Ansprüche, **dadurch gekennzeichnet, dass** die Eingangsöffnung (17) und die Ausgangsöffnung (19) eine zueinander parallele Ausrichtung aufweisen.

4. Schalenverschließmaschine nach einem der vorangehenden Ansprüche, **dadurch gekennzeichnet, dass** die Eingangsöffnung (17) eine Querschnittsfläche (22) von 20 bis 50 mm² und/oder die Ausgangsöffnung (19) eine Querschnittsfläche (23) von 30 bis 80 mm² aufweist.

5. Schalenverschließmaschine nach einem der vorangehenden Ansprüche, **dadurch gekennzeichnet, dass** eine Leitung (25) innerhalb der Schalenaufnahme (8) von der Ausgangsöffnung (19) nach unten in einen Innenraum (30) des Siegelwerkzeugunterteils (6) vorgesehen ist.

6. Schalenverschließmaschine nach einem der vorangehenden Ansprüche, **dadurch gekennzeichnet, dass** jede der Begasungsöffnungen (14) und der Evakuierungsöffnungen (15) wenigstens teilweise oberhalb einer Ebene (E), die durch die Schalenauflage (12) definiert ist, vorgesehen sind.

7. Schalenverschließmaschine nach einem der vorangehenden Ansprüche, **dadurch gekennzeichnet, dass** die Eingangsöffnung (17) und die Ausgangsöffnung (19) jeweils auf einer gemeinsamen Seite der Schalenaufnahme (8) mit den Begasungsöffnungen (14) und Evakuierungsöffnungen (15) angeordnet sind.

8. Verfahren zum Reinigen einer Schneidnut (16) einer Schalenverschließmaschine, wobei die Schalenverschließmaschine (1) ein Siegelwerkzeugunterteil (6) mit einer mindestens eine Öffnung (9) für je eine Schale (20) umfassenden Schalenaufnahme (8) und ein Siegelwerkzeugoberteil (7) umfasst, wobei die Schalenaufnahme (8) pro Öffnung (9) je eine Schneidnut (16), die jeweils umlaufend um die Öffnung (9) in der Schalenaufnahme (8) vorgesehen ist, aufweist, und wobei die Schalenaufnahme (8) jeweils mehrere Begasungsöffnungen (14) und Evakuierungsöffnungen (15) zum Begasen oder Gasspülen jeweils einer Schale (20) aufweist, **dadurch gekennzeichnet, dass** die Schalenaufnahme (8) zusätzlich wenigstens eine jeweils in die Schneidnut (16) weisende Eingangsöffnung (17) und jeweils mindestens eine in die Schneidnut (16) weisende Ausgangsöffnung (19) zum Gasspülen der Schneidnut (16) aufweist, und dass vor dem Siegeln und/oder während des Siegelvorgangs ein Gas durch die Eingangsöffnung (17) in die Schneidnut (16) eingebracht wird und dieses Gas von der Eingangsöffnung (17) zur Ausgangsöffnung (19) in der Schneidnut (16) strömt und durch die Ausgangsöffnung (19) wenigstens teilweise aus der Schneidnut (16) ausgeleitet wird.

9. Verfahren nach Anspruch 8, **gekennzeichnet durch** einen U-förmigen Verlauf der Gasströmung in der Schneidnut (16) von der Eingangsöffnung (17) zur Ausgangsöffnung (19).

## Claims

1. Tray sealer (1) comprising a sealing tool lower part (6) with a tray receptacle (8) comprising at least one opening (9) for one tray (20) each, and comprising a sealing tool upper part (7), where said tray receptacle (8) for every opening (9) comprises a respective cutting groove (16) which is each provided circumferentially around said opening (9) in said tray receptacle (8), and wherein said tray receptacle (8) comprises a plurality of gas introduction openings (14) and evacuation openings (15) each for introducing gas or flushing a tray (20) with gas, **characterized in that** said tray receptacle (8) additionally comprises at least one inlet opening (17) respectively facing said cutting groove (16) and at least one outlet opening (19) respectively facing said cutting groove (16) for flushing said cutting groove (16) with gas by a gas flow through the cutting groove (16) from the inlet opening (17) to the outlet opening (19).

2. Tray sealer according to claim 1, **characterized in that** said inlet opening (17) and said outlet opening (19) are disposed below a plane (E) of a tray support (12) of said tray receptacle (8).

3. Tray sealer according to one of the preceding claims, **characterized in that** said inlet opening (17) and said outlet opening (19) have an orientation that is parallel to each other.

4. Tray sealer according to one of the preceding claims, **characterized in that** said inlet opening (17) has a cross-sectional area (22) of 20 to 50 mm² and/or said outlet opening (19) has a cross-sectional area (23) of 30 to 80 mm².

5. Tray sealer according to one of the preceding claims, **characterized in that** a line (25) is provided within said tray receptacle (8) from said outlet opening (19) downwardly into an interior space (30) of said sealing tool lower part (6).

6. Tray sealer according to any of the preceding claims, **characterized in that** each of said gas introduction openings (14) and said evacuation openings (15) is at least in part provided above a plane (E) which is defined by said tray support (12).

7. Tray sealer according to one of the preceding claims, **characterized in that** said inlet opening (17) and said outlet opening (19) are each arranged on a common side of said tray receptacle (8) with said gas introduction openings (14) and evacuation openings (15).

8. Method for cleaning a cutting groove (16) of a tray sealer (1), wherein the tray sealer (1) comprises a sealing tool lower part (6) with a tray receptacle (8) comprising at least one opening (9) for one tray each, and comprising a sealing tool upper part (7), wherein said tray receptacle (8) for each opening (9) comprises a respective cutting groove (16) which is each provided circumferentially around said opening (9) in said tray receptacle (8), and wherein the tray receptacle (8) comprises a plurality of gas introduction openings (14) and evacuation openings (15) for introducing gas or flushing a tray (20) with gas, **characterized in that** the tray receptacle (8) additionally comprises at least one inlet opening (17) respectively facing said cutting groove (16), and at least one outlet opening (19) respectively facing said cutting groove (16) for flushing said cutting groove (16) with gas, and wherein prior to sealing and/or during the sealing operation, a gas is introduced through said inlet opening (17) into said cutting groove (16), and this gas flows from the inlet opening (17) through the cutting groove (16) to the outlet opening (19) and is discharged at least in part from said cutting groove (16) through the outlet opening (19).

9. Method according to claim 8, **characterized by** a U-shaped path of the gas flow within the cutting groove (16) from the inlet opening (17) to the outlet opening (19).

## Revendications

1. Machine de fermeture de barquettes (1) comprenant une partie inférieure d'outillage de scellage (6) avec un porte-barquettes (8) comportant au moins une ouverture (9) pour une barquette (20) respective, et une partie supérieure d'outillage de scellage (7), le porte-barquettes (8) présentant respectivement, pour chaque ouverture (9), une rainure de coupe (16), qui est prévue de manière périphérique respectivement autour de l'ouverture (9) dans le porte-barquettes (8), et le porte-barquettes (8) présentant respectivement plusieurs ouvertures d'alimentation en gaz (14) et ouvertures d'évacuation (15) pour alimenter en gaz ou effectuer un rinçage au gaz d'une barquette (20) respective, **caractérisée en ce que** le porte-barquettes (8) présente en plus, au moins une ouverture d'entrée (17) respectivement dirigée dans la rainure de coupe (16), et respectivement au moins une ouverture de sortie (19) dirigée dans la rainure de coupe (16), pour le rinçage au gaz de la rainure de coupe (16) par un écoulement de gaz s'étendant de l'ouverture d'entrée (17) jusqu'à l'ouverture de sortie (19) dans la rainure de coupe (16).

2. Machine de fermeture de barquettes selon la revendication 1, **caractérisée en ce que** l'ouverture d'entrée (17) et l'ouverture de sortie (19) sont agencées en-dessous d'un plan (E) d'un appui de barquette (12) du porte-barquettes (8).

3. Machine de fermeture de barquettes selon l'une des revendications précédentes, **caractérisée en ce que** l'ouverture d'entrée (17) et l'ouverture de sortie (19) présentent une orientation mutuellement parallèle.

4. Machine de fermeture de barquettes selon l'une des revendications précédentes, **caractérisée en ce que** l'ouverture d'entrée (17) présente une surface de section transversale (22) de 20 à 50 mm², et/ou l'ouverture de sortie (19) présente une surface de section transversale (23) de 30 à 80 mm².

5. Machine de fermeture de barquettes selon l'une des revendications précédentes, **caractérisée en ce qu'**une conduite (25) est prévue à l'intérieur du porte-barquettes (8), de l'ouverture de sortie (19) vers le bas dans une chambre intérieure (30) de la partie inférieure d'outillage de scellage (6).

6. Machine de fermeture de barquettes selon l'une des revendications précédentes, **caractérisée en ce que** chacune des ouvertures d'alimentation en gaz (14) et des ouvertures d'évacuation (15) sont prévues au moins partiellement au-dessus d'un plan (E), qui est défini par l'appui de barquette (12).

7. Machine de fermeture de barquettes selon l'une des revendications précédentes, **caractérisée en ce que** l'ouverture d'entrée (17) et l'ouverture de sortie (19) sont agencées respectivement sur un côté commun du porte-barquettes (8) avec les ouvertures d'alimentation en gaz (14) et les ouvertures d'évacuation (15).

8. Procédé pour nettoyer une rainure de coupe (16) d'une machine de fermeture de barquettes, la machine de fermeture de barquettes (1) comprenant une partie inférieure d'outillage de scellage (6) avec un porte-barquettes (8) comportant au moins une ouverture (9) pour une barquette (20) respective, et une partie supérieure d'outillage de scellage (7), le porte-barquettes (8) présentant respectivement, pour chaque ouverture (9), une rainure de coupe (16), qui est prévue de manière périphérique respectivement autour de l'ouverture (9) dans le porte-barquettes (8), et le porte-barquettes (8) présentant respectivement plusieurs ouvertures d'alimentation en gaz (14) et ouvertures d'évacuation (15) pour alimenter en gaz ou effectuer un rinçage au gaz d'une barquette (20) respective, **caractérisé en ce que** le porte-barquettes (8) présente en plus, au moins une ouverture d'entrée (17) respectivement dirigée dans la rainure de coupe (16), et respectivement au moins une ouverture de sortie (19) dirigée dans la rainure de coupe (16), pour le rinçage au gaz de la rainure de coupe (16), et **en ce qu'**avant le scellage et/ou pendant l'opération de scellage, un gaz est introduit dans la rainure de coupe (16) en passant par l'ouverture d'entrée (17), et ce gaz s'écoule de l'ouverture d'entrée (17) jusqu'à l'ouverture de sortie (19) dans la rainure de coupe (16), et est évacué au moins partiellement de la rainure de coupe (16) par l'intermédiaire de l'ouverture de sortie (19).

9. Procédé selon la revendication 8, **caractérisé par** un parcours en forme de U de l'écoulement de gaz dans la rainure de coupe (16), de l'ouverture d'entrée (17) à l'ouverture de sortie (19).
